# EUROPEAN PATENT APPLICATION

(11) **EP 2 762 231 A1**
(43) Date of publication of application: **06.08.2014**
(21) Application number: 13000457.5
(22) Date of filing: 30.01.2013
(51) Int. Cl.: B01L 3/00, G01N 21/64, G03F 7/00, G02B 3/00, G02B 5/04

(54) **Microfluidic device and method of manufacturing thereof**

(71) Applicant: Max-Planck-Gesellschaft zur Förderung der Wissenschaften e.V., 80539 München (DE)
(72) Inventor: Lim, Jiseok, 37077 Göttingen (DE); Baret, Jean-Christophe, 37085 Göttingen (DE); Gruner, Philipp, 34346 Hann. Münden (DE); Konrad, Manfred, 37083 Göttingen (DE)
(74) Representative: Hertz, Oliver

(57) **Abstract**

A microfluidic device (100), configured for accommodating a liquid (1) containing droplets (2), comprises a channel arrangement (110) comprising a substrate plate (111) and a transparent cover plate (112), said channel arrangement (110) including at least one channel (113) being adapted for carrying the liquid and being enclosed by a bottom wall (114) and side walls (115) of the substrate plate (111) and by the cover plate (112), and a lens array (120) comprising a plurality of focusing lenses (121) being arranged in alignment with the at least one channel (113), so that sample light (3) created in the at least one channel (113) can be collected by the focusing lenses (121), wherein the focusing lenses (121) comprise refractive lenses being arranged on at least one of the substrate plate (111) and the cover plate (112), and each of the focusing lenses (121) has a focal position (4) in the at least one channel (113) or on an inner surface of the bottom wall (114) or the cover plate (114). Furthermore, an assay apparatus including the microfluidic device and a method for manufacturing the microfluidic device are described.

## Description

The invention relates to a microfluidic device, which is configured for accommodating a liquid containing droplets, in particular to a microfluidic device having at least one channel for carrying the liquid and focusing lenses for collecting sample light created in the at least one channel. Furthermore, the invention relates to an assay apparatus, which includes the microfluidic device. Furthermore, the invention relates to a method of manufacturing the microfluidic device. Applications of the invention are available in the fields of chemistry, biochemistry, biology and medicine, in particular in the field of testing samples dispersed in the liquid.

Droplet-based microfluidic systems are promising platforms for high-throughput screening applications (see e.g. A.B. Theberge et al. in "Angew. Chem. Int. Ed." vol. 49, 2010, p. 5846-5868, or M. T. Guo et al. in "Lab chip", vol. 12, 2012, p. 2146-2155). The encapsulation of biomaterials, such as proteins, nucleic acids, single genes, cells or cell groups makes droplets perfectly suitable as a tool for miniaturized and automatized enzymatic assays, cell screening, molecular cancer diagnostics or drug screening. An advantage of the technique is obtained by the very high-throughput of each individual step of droplet manipulation, which reaches several kHz for droplet production, reinjection, fission or fusion. With a parallelization of the droplet production, an increase of the production rate by one or two orders of magnitude can be obtained. With increased throughput in droplet production, analytical tools have been developed, which are adapted for a high speed analysis of single droplets, e.g. based on fluorescence intensity measurements. Although fluorescence intensity measurements have advantages in terms of the convenient, non-destructive, rapid and sensitive measurement and the availability of sensitive detectors, like photomultipliers or photodiodes or high-speed cameras, the conventional fluorescence detection systems have the following limitations when applied for massively parallel detection.

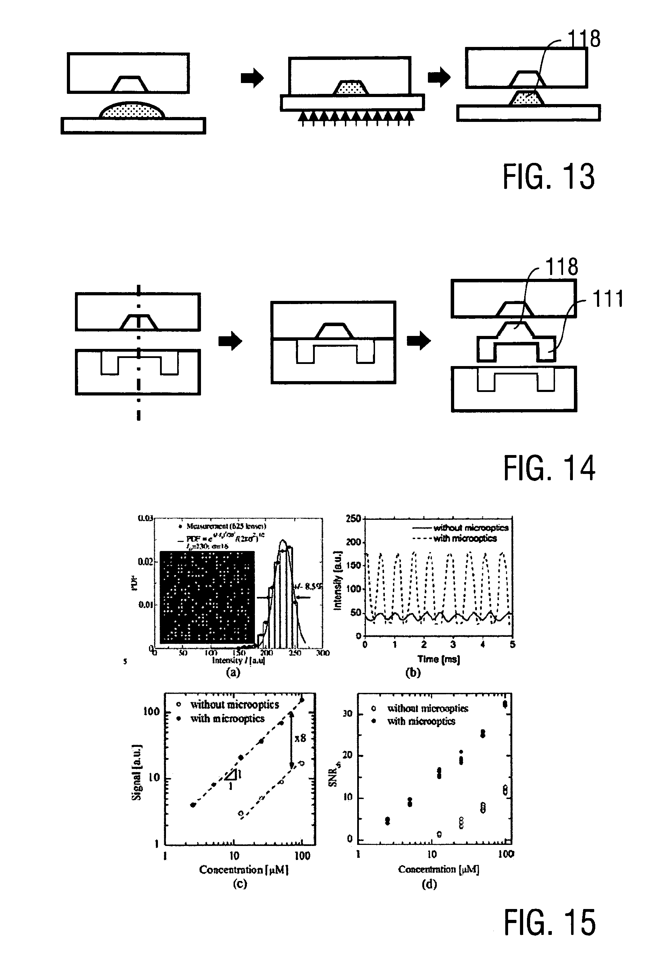

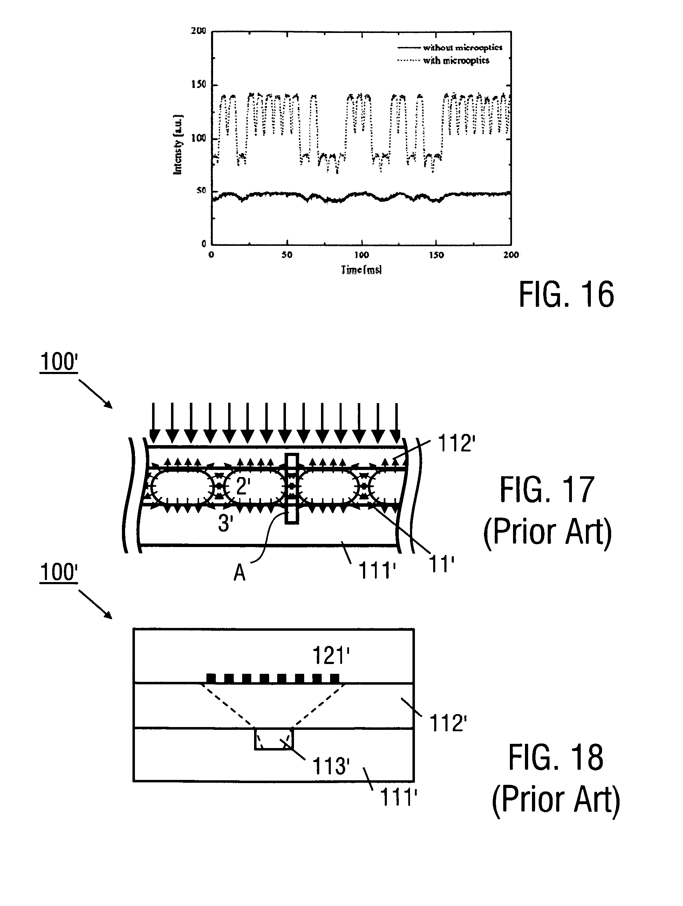

Firstly, optical systems with a high numerical aperture such as photomultipliers can offer sufficient sensitivity, but a multi-point measurement is difficult to achieve. Secondly, small numerical aperture objectives with a large field of view allow for parallelization, but their optical sensitivity is limited. For avoiding these limitations, a parallelization of the optical detection has been proposed, wherein a plurality of droplets in the microfluidic system is simultaneously illuminated with excitation light, and an image of the illuminated area including fluorescing samples in the droplets is collected with a sensitive camera (see e.g. E. Schonbrun et al. in "Lab.chip" vol. 10, 2010, p. 852-856; or A. Lobera et al. "Lab chip" vol. 10, 2012, p. 1987-1992). Conventional approaches implementing the parallel optical detection are schematically illustrated in Figures 15 and 16.

According to Figure 17 (prior art), a cross-sectional view of a portion of a conventional microfluidic device 100' is illustrated. A channel arrangement includes a channel 113' between a bottom plate 111' and a cover plate 112'. A liquid 1' including droplets 2' is flowing through the channel 113'. The liquid 1' with the droplets 2' is illuminated through the cover plate 113' with excitation light from a light source (not shown). Sample light 3' including weak fluorescence of biological samples in the droplets 2' is radiated in all spatial directions. Collecting a filtered image of the droplets 2' trough the cover plate 112' yields a distribution of the fluorescence intensity to be obtained. The image is analyzed for characterizing the samples in the droplets 2'. The conventional technique of Figure 17 has essential disadvantages in terms of limited spatial resolution in analyzing single droplets. The resolution is limited due to signal overlapping between neighbouring droplets (see rectangular section A with maximum signal overlapping).

For improving the spatial resolution, Schonbrun et al. (cited above) have proposed a modified microfluidic device 100' as illustrated in Figure 18 (prior art). The microfluidic device 100' of Schonbrun et al. comprises a channel arrangement with a plurality of channels and a lens array with a plurality of focusing lenses. Figure 18 shows a cross-sectional view of a single channel 111' with a single focusing lens 121' only (seen along a longitudinal direction of the channel 111'). The focusing lens 121' comprises a zone plate lens, which is formed in a zone plate arranged on the upper cover plate 112' of the channel arrangement. With the zone plate lens 121' an excitation spot is formed in the channel 113', and the fluorescence emission in the channel 113' is collected. While a certain degree of improved sensitivity can be obtained with the Schonbrun et al. technique, there are still disadvantages in terms of imaging the droplets with high spatial resolution. The zone plate lens 121' has a substantial chromatic aberration, so that the focal length at the excitation wavelength is different from the focal at the emission wave length. For minimizing this problem, the excitation light is not focused, but matched to the width of the channel 113' as schematically illustrated with the dashed line in Figure 18. As a result, the spatial resolution in imaging the droplets is restricted. As a further disadvantage, the microfluidic device 100' of Schonbrun et al. has a complex structure including the stack of the bottom plate 111', the cover plate 112' and the zone plate of the lens array 120'.

The objective of the present invention is to provide an improved microfluidic device, which is capable of avoiding disadvantages of conventional techniques. In particular, the microfluidic device is to be capable of allowing the measurement of sample light in at least one channel of the microfluidic device with improved sensitivity and/or improved spatial resolution. Furthermore, it is an objective of the invention to provide an assay apparatus, which is adapted for analyzing samples in dispensed droplets, in particular biological samples, which includes the improved microfluidic device. Furthermore, it is an objective to provide an improved method of manufacturing a microfluidic device, which is capable of avoiding the disadvantages of conventional techniques of manufacturing microfluidic devices. In particular, a manufacturing method is to be provided, which is capable of manufacturing microfluidic devices with reduced complexity, while keeping high precision and reproducibility in forming the channels and optical components of the microfluidic device.

These objectives are solved with a microfluidic device, an assay apparatus and a method for manufacturing an microfluidic device comprising the features of the independent claims, respectively. Preferred embodiments and applications of the invention are defined in the dependent claims.

According to a first general aspect of the invention, a microfluidic device is provided, which is configured for accommodating a liquid including droplets. The microfluidic device comprises a channel arrangement including at least one channel, which is arranged for carrying the liquid. The channel arrangement comprises a substrate plate and a transparent cover plate, and the at least one channel is being enclosed by a bottom wall and side walls of the substrate plate and by the cover plate. Furthermore, the microfluidic device comprises a lens array having a plurality of focusing lenses. The focusing lenses are arranged in alignment with the at least one channel, so that sample light created in the liquid, in particular in the droplets at predetermined positions thereof can be collected with the focusing lenses. According to the invention, the focusing lenses comprise refractive lenses, which are arranged on at least one of the substrate plate and the cover plate of the channel arrangement. Contrary to the zone plate lenses of the conventional microfluidic device, refractive lenses are provided with the inventive microfluidic device for collecting the sample light. The refractive lenses have a plurality of advantages which have been recognized by the present inventors for the first time. Firstly, the chromatic aberration of the zone plate lens used with the conventional technique can be avoided with the refractive lens. The imaging properties of the refractive lenses are determined by the lens shape and the optical dispersion of the lens material, typically a plastic e.g. a polymer. Thus, the focusing lenses used according to the invention facilitate a focusing of both the excitation and the emitted sample light even if there is a large wavelength difference there between.

Furthermore, according to the invention, each of the focusing lenses is adapted to concentrate the illumination with excitation light and/or to collect the sample light at a confined position (focal position or position of evanescent wave creation), which is provided in the at least one channel, in particular in the channel volume or on channel wall surfaces enclosing the channel volumes, like on an inner surface of the bottom wall or the cover plate. Contrary to the broadened illumination of the channel as provided with the conventional technique, the inventive microfluidic device, in particular the refractive lenses thereof, are adapted for a confined, in particular focused, excitation with excitation light and/or collection of sample light from a confined position, e. g. focal position or position of evanescent wave creation. Accordingly, the spatial resolution in imaging droplets in the microfluidic is essentially improved and/or the flow rate of the liquid with the droplets in the at least one channel can be increased while keeping the precision and reproducibility of the optical detection.

According to a second general aspect of the invention, an assay apparatus is provided, which is configured for analyzing samples, in particular biological samples, included in droplets in a liquid. The assay apparatus comprises a microfluidic device according to the above first aspect of the invention. Furthermore, the assay apparatus comprises an excitation device having a light source, which is arranged for illuminating the microfluidic device with excitation light. Furthermore, the assay apparatus comprises a sensor device, having a detector device, which is arranged for collecting sample light, in particular an image of sample light, created in the at least one channel of the microfluidic device. The detector device preferably is a semiconductor-based camera, like e.g. a CCD camera or a CMOS camera. Due to the provision of the inventive microfluidic device, the inventive assay apparatus has advantages in terms of precision and reproducibility of the parallel optical detection in the at least one channel of the microfluidic device and improved analysis capability, in particular for weakly fluorescing samples.

According to a third general aspect of the invention, a method for manufacturing the microfluidic device according to the above first aspect is provided. The manufacturing method comprises a step of forming the at least one channel of the channel arrangement in a substrate plate providing the bottom wall and the side walls of the at least one channel. Furthermore, the manufacturing method comprises a step of forming the lens array with the refractive focusing lenses on a separate plate component which provides the cover plate of the channel arrangement. Finally, the substrate plate including the at least one channel and the lens array are aligned, such that the focusing lenses are arranged for focusing excitation light into the at least one channel and/or collecting sample light from the at least one channel, and bonded together. The manufacturing method of the invention has advantages in terms of making the microfluidic device with a reduced number of components and the ability of forming the focusing lenses with high precision and reproducibility.

The term "microfluidic device" generally refers to any device including hollow structures for accommodating and carrying liquids, wherein the hollow structures have a sub-mm cross-sectional dimension, e.g. sub-mm side lengths of channel cross-sections. In other words, the at least one channel of the microfluidic device has a cross-sectional dimension, e.g. diameter or side length, below 1 mm, preferably below 500 µm. Generally, the microfluidic device is made of a solid biocompatible material, like e.g. glass, semiconductor, ceramic or plastics, wherein at least one of the substrate plate and the cover plate of the channel arrangement is optically transparent, e.g. transparent for light in the infra-red, visible or ultraviolet wavelength ranges.

The term "sample light" refers to any radiation created in the liquid, in particular in the droplets in the liquid, in response to an illumination with excitation light. Thus, the sample light may comprise fluorescence light and/or a light emission created by plasmon resonance enhancement of fluorescence light.

According to a preferred embodiment of the invention, the focusing lenses are directly connected with the cover plate or the substrate plate. With the preferred embodiment of the inventive manufacturing method, the focusing lenses are formed on the cover plate or the substrate plate without an additional plate component. Advantageously, the cover plate or the substrate plate fulfils a double function in terms of covering or providing the at least one channel of the microfluidic device and carrying the refractive lenses. Thus, the structure of the microfluidic device is less complex compared with conventional techniques.

As a further advantage of the invention, various detection schemes can be implemented with the inventive microfluidic device. According to a first preferred embodiment (so-called focused excitation embodiment), the excitation light is focused by the refractive lenses through the cover plate or the substrate plate into the at least one channel at predetermined focal positions according to the arrangement of the refractive lenses, and the fluorescence created in response to the illumination is collected using the refractive lenses. According to a second embodiment (so-called evanescent wave embodiment), excitation light is coupled through the bottom wall or the cover plate as an evanescent wave into the channel, and the focusing lenses are arranged for collecting the fluorescence created at the channel wall surfaces, where the evanescent waves are provided. With the evanescent wave embodiment, the excitation light can be coupled into the at least one channel using the focusing lens or an additional refractive coupling prism.

According to further preferred embodiments of the invention, in particular with both of the focused excitation and evanescent wave embodiments, at least one surface of the bottom plate, the bottom wall and/or the side walls and/or the cover plate of the at least one channel is adapted for an enhancement of the sample light to be collected. Advantageously, multiple variants exist for providing this sample light enhancement.

Preferably, a reflective coating can be provided on at least one of the bottom wall, the cover plate and the side walls. The reflective coating provides a reflective mirror, which improves the sample light collection in the at least one channel. The coating may comprise a single layer or a multilayer coating, like e.g. a dielectric coating or a coating made of one or multiple inert metal(s). According to a particularly preferred embodiment, the reflective coating is positioned on the inner surface of the bottom wall, i.e. opposite to the cover plate and on the inner surface of the side walls. According to a second variant, the enhancement of sample light can be provided by a nanostructure coating on the at least one inner surface of the at least one channel. The nanostructure coating creates a plasmon resonance enhancement of the sample light. According to a third variant, which is preferred with the evanescent wave embodiment of the invention, the enhancement of sample lights is obtained with a mask coating, which provides an angular filter on the cover plate for creating the evanescent wave and blocking a direct irradiation by the excitation light.

According to a further advantage of the invention, there is no limitation with regard to the number and shape of the channels of the microfluidic device. The channel arrangement may comprise one single microfluidic channel only. In this case, the lens array comprises a line array of focusing lenses arranged along the course of the single channel, e. g. a straight line array arranged over a straight channel. However, according to the preferred implementation of the invention, the channel arrangement comprises a plurality of channels, and the lens array is a two-dimensional arrangement of the focusing lenses being arranged in alignment with the channels. This embodiment has advantages in particular in terms of high-throughput screening of samples and efficient parallel optical detection.

According to a particularly preferred embodiment of the invention, the channels have an elongate straight shape. All channels are aligned in parallel with a longitudinal reference direction (z direction). Depending on the function of the microfluidic device, the channels may have a fluidic serial or parallel connection. With the parallel channels, the lens array comprises a matrix arrangement of the focusing lenses with straight columns and rows of the focusing lenses, wherein each column of the focusing lenses is aligned with one of the channels and each row of the focusing lenses is aligned perpendicular to the longitudinal direction of the channels. With the embodiment using parallel straight channels and the matrix arrangement of focusing lenses, the density of droplets, which can be measured simultaneously is increased compared with the conventional techniques, in particular compared with the Schonbrun et al. technique.

The focusing lenses of the inventive microfluidic device may have various shapes for obtaining the refractive properties to be used. The shape can be selected in dependency on the particular application of the microfluidic device. Furthermore, the shape may be provided in dependency on the technique used for forming the focusing lenses. With preferred examples, the focusing lenses have a spherical or a non-spherical shape. A spherical shape may have advantages in terms of adjusting the focal position of the focusing lens in the channel. The non-spherical shape may be preferred for generating a line illumination pattern in the channel. Furthermore, according to a particularly preferred embodiment of the invention, the focusing lenses have a shape, which is formed by a surface tension of the material during the manufacturing of the focusing lenses. The inventors have found that the formation of the focusing lenses by melting a pedestal structure at the position of the focusing lens has essential advantages for reducing the complexity of the manufacturing method, while keeping sufficient optical properties of the focusing lenses.

According to a further advantageous feature of the invention, the cover plate carrying the focusing lenses can be removably arranged on the channel arrangement. In other words, the microfluidic device can be simply adapted to different advantages or optical conditions by selecting an appropriate cover plate.

With the evanescent wave embodiment of the invention, the excitation light can be coupled in to the channel using the focusing lenses. Alternatively, an array of refractive prism elements can be provided on the outer surface of the microfluidic device, in particular on the outer surface of the substrate plate, wherein the refractive prism elements are aligned with focusing lenses on the cover plate of the channel arrangement. With this embodiment, the excitation light is coupled via evanescent waves through the substrate plate into the at least one channel, and the focal positions of the focusing lenses are located at the portions where the evanescent waves occur in the at least one channel. Alternatively, the array of refractive prism elements can be provided on the outer surface of the cover plate, while the focusing lenses are arranged on the opposite side of the channel arrangement, i. e. on the outer surface of the substrate plate.

Further details and advantages of the invention are described in the following with reference to the attached drawings. The drawings show in
- Figures 1 and 2:: schematic cross-sectional views of the focused excitation embodiment of the inventive microfluidic device at different operation states,
- Figure 3:: a schematic illustration of an inventive assay apparatus using the focused excitation embodiment of the microfluidic device;
- Figures 4 and 5:: schematic cross-sectional illustrations of the evanescent wave embodiment of the inventive microfluidic device;
- Figure 6:: a schematic illustration of an assay apparatus using the evanescent wave embodiment of the inventive microfluidic device;
- Figure 7 and 8:: further examples of the evanescent wave embodiment using refractive prism elements for creating evanescent waves;
- Figures 9 and 10:: schematic plan views of inventive microfluidic devices with serial or parallel fluidic coupling;
- Figure 11:: an experimental result obtained with the inventive microfluidic device;
- Figure 12:: a schematic illustration of manufacturing a microfluidic device according to the focused excitation embodiment;
- Figures 13 and 14:: schematic illustrations of manufacturing a microfluidic device according to the evanescent wave embodiment;
- Figures 15 and 16:: further experimental results obtained with the inventive microfluidic device; and
- Figures 17 and 18:: cross-sectional illustrations of conventional microfluidic devices (prior art).

Preferred embodiments of the invention are described in the following with exemplary reference to a planar microfluidic device including one or multiple channels carrying a liquid with suspended droplets. Details of the microfluidic device and the operation thereof, e. g. the generation of sample containing droplets dispensed in a liquid, are not described as far as they are known from conventional microfluidics. Furthermore, details of the fluorescence measurement, in particular the selection of an appropriate excitation wavelength and the image processing after the parallel optical detection, are not described as far as they are known from conventional techniques.

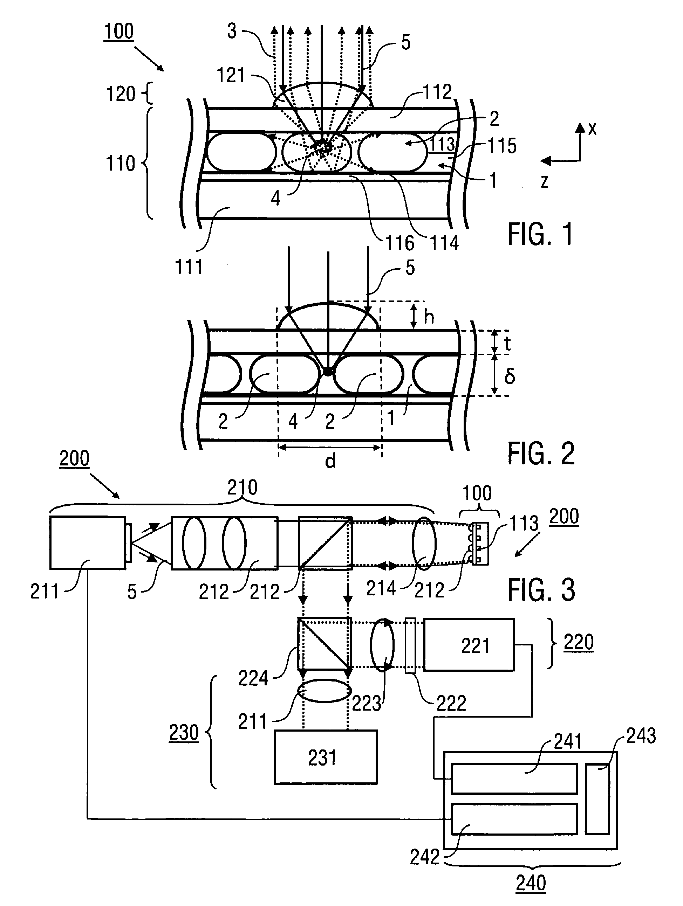

The focused excitation embodiment of the inventive microfluidic device 100 is schematically illustrated in Figures 1 and 2, which show enlarged cross-sectional views of a portion of the microfluidic device 100. The microfluidic device 100 has a plane shape extending in an y-z-plane (perpendicular to the drawing plane) of a reference coordinate system with an x direction oriented perpendicular to the plane extension. Figures 1 and 2 show the cross-sectional view with reference to the x-z-plane.

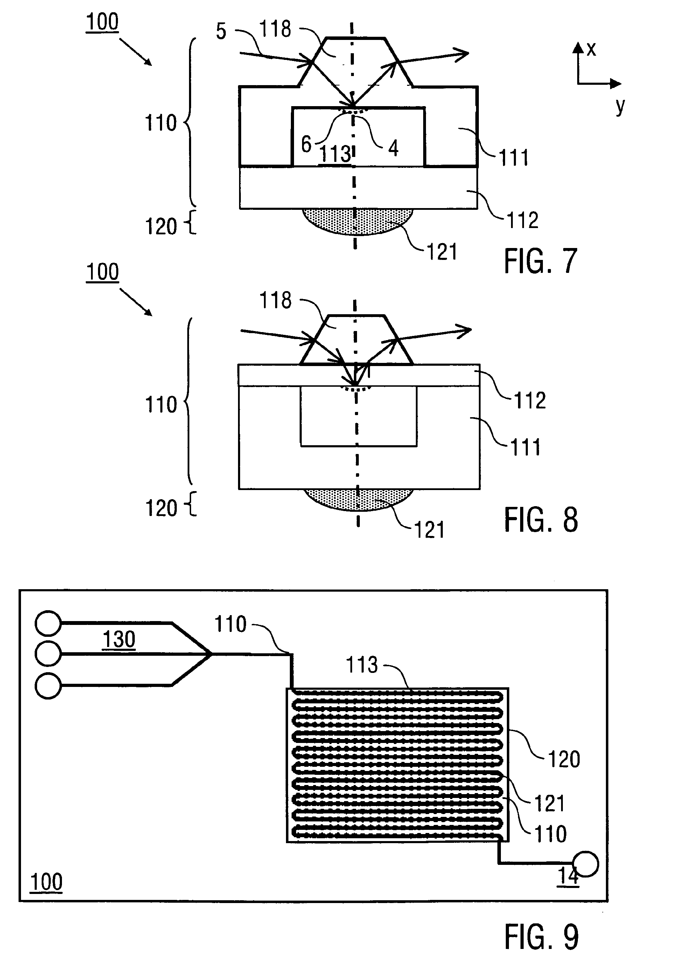

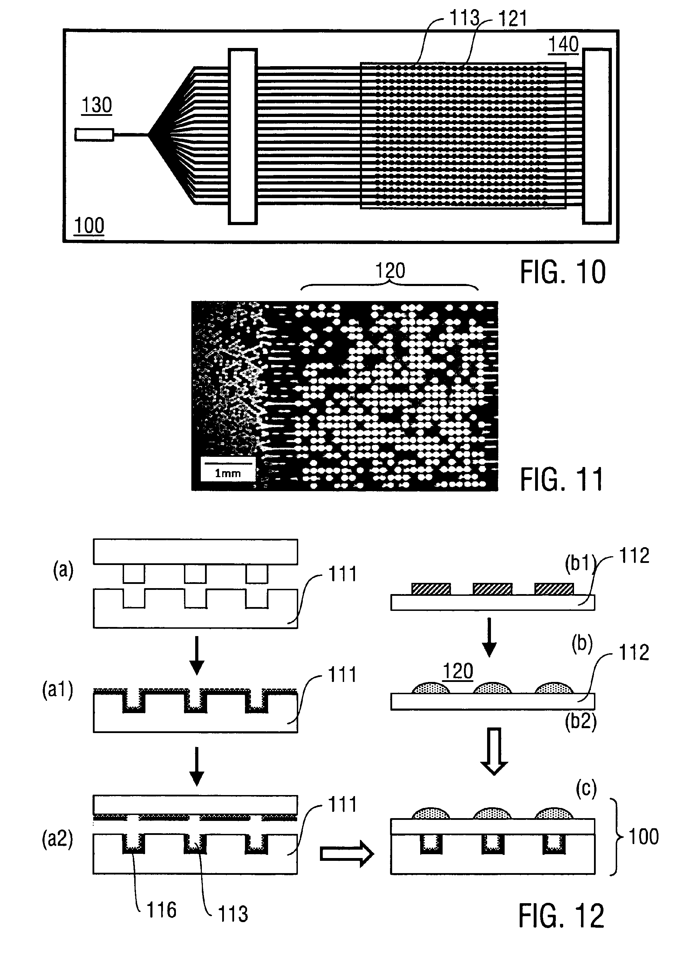

The microfluidic device 100 comprises a channel arrangement 110 and a lens array 120. The channel arrangement 110 preferably has a plurality of channels 113 (see Figures 9 and 10), while Figures 1 and 2 for clarity reasons show one channel 111 only extending in the z-direction. The channel arrangement 110 comprises a substrate plate 111 providing a bottom wall 114 and side walls 115 of the channel 113 and a cover plate 114 closing the channel 113. The substrate plate 111 carries a reflective coating 116 facing to the channel 113. Accordingly, the inner channel surfaces, except for the cover plate 112, function as reflective mirrors.

The lens array 120 is formed by a plurality of focusing lenses 121 arranged on the cover pate 112. For clarity reasons, Figures 1 and 2 show a single focusing lens 121 only. With the complete microfluidic device 100, a plurality of focusing lenses 121 are arranged in alignment with the channels 113 (see Figures 9 and 10). The focusing lens 121 is a refractive lens with a convex shape. The focusing lens 121 has a focal position 4 within the channel 113.

With the practical example, the substrate plate 111 and the cover plate 112 are made of a ceramic, a semiconductor material, glass or a plastics material. The focusing lens 121 is made of glass or a plastics material. Both the cover plate 112 and the focusing lens 121 are transparent materials. The reflective coatings 116 are made of e.g. Au, Ag or Pt or other inert materials. The substrate plate 111 has a thickness of e.g. 1 mm. The dimension of the side walls 113 is selected such that the channel height δ is e.g. 50 µm, while the thickness t of the cover plate 112 is selected in the range of e.g. 150 to 160 µm. The diameter d and sag h of the focusing lens 121 are 120 µm and 20 µm, respectively. Wherein the radius of curvature of the focusing lens 121 is about 100 µm. The focusing lens 121 is dimensioned such that the focal length f_{b} thereof is in a range between t and t + δ.

During the operation of the microfluidic device 100, e.g. for optically detecting and analyzing samples in the channel 113, a carrier liquid 1 with droplets 2 flows through the channel 113. The liquid 1 comprises e.g. fluorocarbon oil (HFE-7500), while the droplets 2 are made of e.g. phosphate buffered saline (PBS) containing the sample. The droplets 2 include samples consisting of e.g. biological materials like biological cells or parts thereof, such as proteins, nucleic acids, single genes, cells or cell groups. During the flow through the channel 113, each droplet 2 passes the focal positions 4 of the focusing lenses 121. Excitation light 5 (solid arrows) is coupled through the focusing lens 121 and the cover plate 112 to the focal position 4, where fluorescence is excited depending on the properties of the samples in the droplet 2. The fluorescence is collected as samples light 3 through the cover plate 112 and the focusing lens 121 for a parallel optical detection.

Figure 1 shows an operation state, wherein a droplet 2 is aligned with the focusing lens 121. The focal position 4 is arranged within the droplet 2. After a period of time, which depends on the flow velocity of the liquid 1 in the channel 113, another operation state is obtained as shown in Figure 2. The focal position 4 is in the liquid 1 in a gap between two droplets 2. The excitation light 5 does not create fluorescence, so that no sample light can be collected. Due to the focusing action of the focusing lens 121, the differences between both operation states, e.g. detection of sample light 3 and no detection, can be sensed with essentially improved contrast compared with conventional techniques. In contrast to the invention, according to the Schonbrun et al. technique, a broader range is excited within a channel, so that the advantages of the invention could not be obtained.

Figure 3 schematically illustrates an embodiment of an inventive assay apparatus 200, which comprises the microfluidic device 100, an excitation device 210 and a sensor device 220. Optionally, a monitoring device 230 can be provided as shown in Figure 3. Furthermore, the assay apparatus includes a control device 240, which is connected in particular with the excitation device 210 and the sensor device 220.

The excitation device 210 includes a light source 211, a beam shaper 212, a dichroic beam splitter 213 and an objective 214 with low numerical aperture. The light source 211 is arranged for creating a monochromatic excitation light 5. Preferably, the light source 211 comprises a laser source, like e.g. a diode laser, or an LED source, like laser CoolLED pE-2 with a blue LED. Alternatively, a combination of a white light source with a monochromator can be used. The beam shaper 212 is adapted for creating a wide field illumination of the microfluidic device 100. The wide field of the excitation light 5 is relayed through the dichroic beam splitter onto the lens array 120 of the microfluidic device 100. Sample light 3 created in the channels 113 of the microfluidic device 100 is imaged with the objective 214 and reflected with the dichroic beam splitter 213 to the sensor device 220.

The sensor device 220 comprises a first camera device 221, a band pass filter 222, and imaging optic 223 and a further dichroic beam splitter 224. The first camera device 221 is a high speed camera, like e.g. the camera of the commercial system "Phantom v210".

The monitoring device 230 comprises a second camera device 231 and an imaging optic 232. The second camera device 231 is a standard video camera, which can be used for recording moving pictures of the microfluidic device 100 and/or for monitoring the operation thereof.

The control device 240 comprises a computer unit including a frame grabber 241, a power controller 242 and a processing unit 243. The frame grabber 241, as included e. g. in the commercial system "Phantom v210", is connected with the first camera device 221 collecting and processing the image frames collected with the first camera device 221. The power controller 242 is connected with the light source 211 for controlling the power thereof and the intensity of the excitation light 5. The processing unit 240 is arranged for further processing and analyzing the image frames. Additionally, the control device 240 can be connected with the microfluidic device 100, in particular with the fluidics driving the flow of the liquid 1 through the channels 113.

With the operation of the assay apparatus 200 of Figure 3, samples included in droplets are flown with a carrier liquid through the microfluidic device 100. The microfluidic device 100 is illuminated with the excitation light 5 generated with the light source 211. Sample light created in the droplets is collected with the lens array 120. With the first camera device 221, image frames are collected with a predetermined detection frequency, wherein each image frame includes a plurality of bright fluorescing spots or dark spots corresponding to the positions of the focusing lenses in the lens array 120. Subsequently, the image frames are analyzed with the processing unit 243.

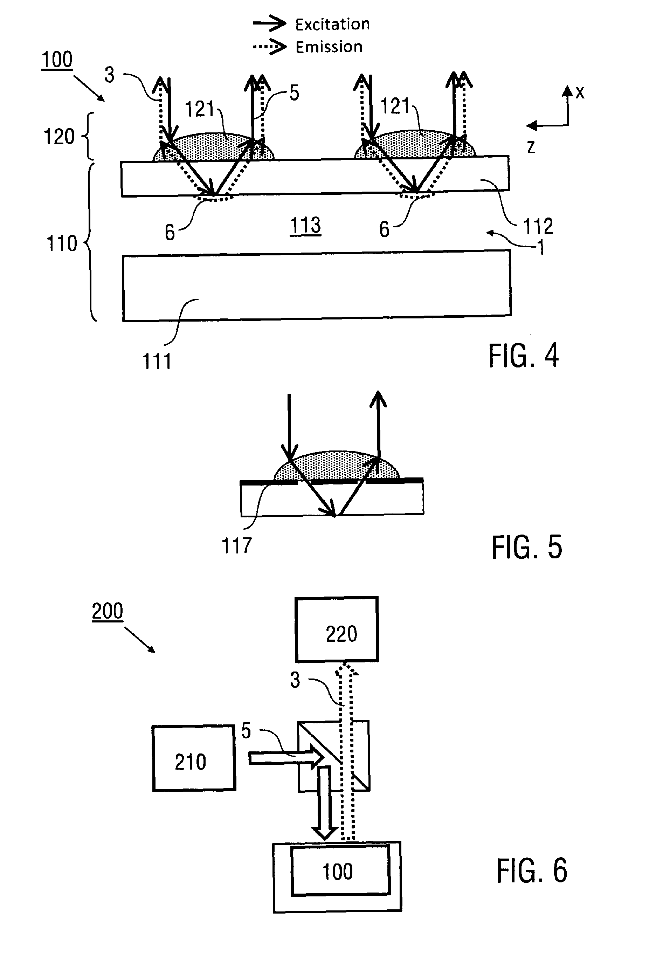

Figures 4 and 5 illustrate further features of the evanescent wave embodiment of the inventive microfluidic device 100. As with the focused excitation embodiment, the microfluidic device 100 comprises a channel arrangement 110 and a lens array 120, which are structured as described above. Contrary to the embodiment of Figures 1 and 2, the excitation light is confined not in a focal position 4 within the channel 113, but on an inner channel surface 115 thereof. Excitation light 5 is directed to the inner channel surface 115 such that a total reflection occurs at the inner surface of the cover plate 112. Evanescent waves 6 are created in confined positions within the liquid 1 in the channel 113, where fluorescence can be excited in dependency on the particular sample in the liquid 1. Sample light 3 (dotted arrows) is collected with the focusing lenses 121 and relayed to a sensor device 220 as described above.

According to Figure 5, a mask coating 117 can be provided on the upper surface of the cover plate 112. The mask coating 117 is arranged for providing an angular filter, so that only light can pass the mask coating 117, which is totally reflected at the inner surface of the cover plate 112. The mask coating 117 comprises a metallic layer, which blocks the rays which have an incident angle beyond the critical angle of total reflection. As an advantage, by setting the ring slit size of the mask coating 117, the imaging quality of the lens array 120 can be controlled.

Figure 6 schematically illustrates the main components of an assay apparatus 200 using the evanescent wave embodiment of Figures 4 and 5. The assay apparatus 200 comprises an excitation device 210 including a light source, a micro-TIRF-microscopic module including the microfluidic device 100 and a detector device 220. Excitation light is deflected via the dichroic beam splitter 213 to the microfluidic device 100. Sample light created by the evanescent waves at the inner channel surfaces of the channels 113 (see Figures 4 and 5) is imaged to the detector device 220.

Further features of the evanescent wave embodiment of the invention are schematically illustrated in Figures 7 and 8, which show the cross-sectional view of the microfluidic device 100 with reference to the x-y-plane (the channel 113 runs perpendicular to the drawing plane). With these embodiments, the microfluidic device 100 (shown in part) comprises a channel arrangement 110 and a lens array 120 as described above. The focusing lenses 121 of the lens array 120 have a focal point 4, which is located at the inner channel surface opposite to the cover plate 112 (Figure 7) or the substrate plate 111 (Figure 8) carrying the focusing lens 121. Evanescent waves of the excitation light 5 are created at this position using refractive prism elements 118, which are arranged on the opposite side of the microfluidic device 100, e.g. on the substrate plate 111 (Figure 7) or on the cover plate 112 (Figure 8). Figure 8 additionally illustrates that the focusing lenses may be arranged on the substrate plate 111 (contrary to the embodiment of e. g. Figure 1).

Figures 9 and 10 show examples of microfluidic devices 100 with a plurality of channels 113. The channels have a fluidic serial connection (Figure 9) or a fluidic parallel connection (Figure 10). The lens array 120 is arranged above the channel arrangement 110 with the parallel channels 113 so that the focusing lenses 121 are aligned with the channels 113. Additionally, the microfluidic devices 100 include a supply unit 130 for supplying the carrier liquid and the samples and for creating the droplets as it is known from conventional microfluidics. With the supply unit 130, flow rates can be controlled e. g. by syringe pumps (neMESYS, Cetoni). Droplets can be produced at a rate of e. g. about 0.8 kHz using an aqueous phase flow rate 70 of 5 µL/min, and an oil-phase flow rate of 20 µL/min. After passing the channel arrangement 110, the liquid with the droplets is collected with a collection unit 140, e.g. for further processing steps. In a practical example, e. g. 25 channels are provided each with 25 associated focusing lenses, so that a matrix of 25 * 25 lenses is formed.

Figure 11 illustrates an example of an experimental result obtained with the inventive microfluidic device 100. The image, which is obtained using a microscope, e.g. with the monitoring device 230 of Figure 3, shows the bright droplets in the range of the lens array 120 with high contrast and high spatial resolution. On the contrary, without the lens array 120 (left part of Figure 11), dots of droplets are merged so that they could not be analyzed with sufficient precision.

Figure 12 illustrates a preferred embodiment of manufacturing the inventive microfluidic device 100. The substrate plate 111 with the bottom wall and side walls of the channel arrangement are created in a first series of manufacturing steps (a), while the cover plate 112 with the lens array 120 is made with a separate series of manufacturing steps (b).

For manufacturing the substrate plate 111 with the bottom wall and side walls, the channel structure is replicated in the polymer PolyDiMethylSiloxane (PDMS) from an SU-(8) negative photoresist with a thickness of 35 µm. It was manufactured using a standard UV-photolithography process as described e.g. by Y. M. Xia et al. in "Ann. Rev. of Mat. Sci.", vol. 28, 1998, p. 253-184, step (a). Subsequently, mirror structures are deposited on the channel walls by metal-evaporation processes (step (a1)). As examples, gold and silver double layers were deposited by thermal evaporation, yielding thicknesses of 100 nm and 200 nm, respectively. The mirror structure (reflective coating 116, see also Figure 1) is designed to have a reasonable reflectance at the wavelengths of excitation and emission and reversible adhesion property with PDMS to withstand fluid flows in the channel, and at the same time to be peeled off during the manufacturing step (a2). Gold as the first layer has the advantage in terms of favourable adhesion properties with PDMS. The silver layer deposited on top has a particular advantage in terms of high reflectivity in the practical wavelength ranges of fluorescence measurements. With step (a2) the metallic layer on the upper PDMS surface is removed using an adhesive tape (e.g. adhesive tape from manufacturer 3M). As a result, the reflective coating 116 is provided on the inner channel surfaces of the channels 113 only.

The lens array 120 is fabricated using a thermal reflow process as described e.g. by M. He in "Optics letters", vol. 28, 2003, p. 731. With step (b1), cylindrical pedestal structures of a positive photoresist (AZ9260) are deposited on a glass substrate providing the cover plate 112. The photoresist is composed of the thermoplastic polymer propylene glycol monomethyl ether acetate. After fabricating the cylindrical pedestal structure on the cover plate 112, it is thermally treated up to glass transition temperature (150 °C) (step (b2)). In this manner, the photoresist shape is converted into a spherical cap by surface tension. To construct the designed focusing lens 121 with a sag of 20 µm, the pedestal structure was first fabricated with a thickness of 11.8 µm. After 1 min thermal treatment at 150 °C the designed shape is generated.

Finally, the cover plate 112 carrying the lens array 120 is aligned with the channel structure using a stereomicroscope equipped with a 4-axis (XYZ-Θ) stage and bonded by using standard oxygen plasma treatment (step (c)).

Figures 13 and 14 schematically illustrate that the evanescent wave embodiment of the inventive microfluidic device can be manufactured with similar procedures. According to Figure 13, the refractive prism 118 (see Figures 7 and 8) is fabricated with a thermal print process using a thermoplastic polymer and a negative stamp. Alternatively, as shown in Figure 14, the substrate plate 111 with the refractive prism 118 can be manufactured as an integral part by moulding.

Figures 15 and 16 show further experimental results obtained with the inventive microfluidic device. In Figure 15 a) shows a signal measured over 625 lenses (100µM fluorescein), Inset: Example of one typical frame, b) shows a fluorescent signal comparison between conventional and inventive microoptics integrated devices, c) shows the fluorescent signal enhanced about 8 times (the signal from 10µM fluorescein detected by the developed device is similar 15 to that obtained from 100µM using a conventional chip), and d) shows an SNR comparison between inventive and conventional devices in decibel scale. Figure 16 shows measured fluorescent signals resulting from the inventive microoptics integrated system as compared to a conventional device, using droplets containing 100 µM and 50 µM fluorescein.

The features of the invention disclosed in the above description, the drawings and the claims can be of significance both individually as well as in combination for the realisation of the invention and its various embodiments.

## Claims

1. Microfluidic device (100), configured for accommodating a liquid (1) containing droplets (2), comprising
- a channel arrangement (110) comprising a substrate plate (111) and a transparent cover plate (112), said channel arrangement (110) including at least one channel (113) being adapted for carrying the liquid and being enclosed by a bottom wall (114) and side walls (115) of the substrate plate (111) and by the cover plate (112), and
- a lens array (120) comprising a plurality of focusing lenses (121) being arranged in alignment with the at least one channel (113), so that sample light (3) created in the at least one channel (113) can be collected by the focusing lenses (121),
**characterized in that**
- the focusing lenses (121) comprise refractive lenses being arranged on at least one of the substrate plate (111) and the cover plate (112), and
- each of the focusing lenses (121) has a focal position (4) in the at least one channel (113) or on an inner surface of the bottom wall (114) or the cover plate (114).

2. Microfluidic device according to claim 1, wherein
- the focusing lenses (121) are formed directly on the at least one of the substrate plate (111) and the cover plate (112).

3. Microfluidic device according to one of the foregoing claims, wherein
- at least one of the substrate plate (111) and the cover plate (112) is adapted for an enhancement of the sample light (3) to be collected in the at least one channel (113).

4. Microfluidic device according to claim 3, wherein the at least one of the substrate plate (111) and the cover plate (112) comprises at least one of
- a single layer or multilayer reflective coating (116) being adapted for providing a reflective mirror,
- a nanostructure coating being adapted for providing a plasmon resonance enhancement of the sample light (3), and
- a mask coating (117) providing an angular filter on the cover plate (114).

5. Microfluidic device according to claim 4, wherein
- the reflective coating (116) is provided on the bottom wall (114) and the side walls (115) of the at least one channel (113).

6. Microfluidic device according to one of the foregoing claims, wherein
- the channel arrangement (110) comprises a plurality of channels (111), and
- the lens array (120) comprises a two-dimensional arrangement of the focusing lenses (121) being arranged in alignment with the channels (111).

7. Microfluidic device according to claim 6, wherein
- the channels (111) have an elongate straight shape being aligned in parallel with a longitudinal reference direction (z),
- the channels (111) have a fluidic serial or parallel connection, and
- the lens array (120) comprises a matrix arrangement (122) with straight columns and rows of the focusing lenses (121), wherein each column of the focusing lenses (121) is arranged in alignment with one of the channels (111) and each row of the focusing lenses (121) is arranged perpendicular to the longitudinal direction (z) of the channels (111).

8. Microfluidic device according to one of the foregoing claims, wherein
- the focusing lenses (121) comprise non-spherical lenses being adapted for generating a line illumination pattern in the at least one channel (113).

9. Microfluidic device according to one of the foregoing claims, wherein
- the cover plate (112) is removably arranged on the channel arrangement (110).

10. Microfluidic device according to one of the foregoing claims, wherein
- the focusing lenses (121) are arranged on one of the substrate plate (111) and the cover plate (112), and
- the other one of the substrate plate (111) and the cover plate (112) carries a plurality of refractive prism elements (118) being arranged in alignment with the focusing lenses (121) and being adapted for coupling evanescent waves into the at least one channel (113).

11. Assay apparatus (200), configured for analyzing samples included in droplets (2) in a liquid (1), comprising
- a microfluidic device (100) according to one of the foregoing claims,
- an excitation device (210) including a light source (211) being arranged for illuminating the microfluidic device (100) with excitation light (5), and
- a sensor device (220) including a first camera device (221) being arranged for collecting sample light (3) created in the at least one channel (113) of the microfluidic device (100).

12. Assay apparatus according to claim 11, further comprising
- a monitoring device (230) including a second camera device (231) arranged for monitoring the channel arrangement (110) of the microfluidic device (100).

13. Method of manufacturing a microfluidic device (100) according to one of the claims 1 to 10, comprising the steps of
(a) forming the at least one channel (113) in the substrate plate (111),
(b) forming the lens array (120) on the cover plate (112) separated from the substrate plate (111), and
(c) aligning and bonding the substrate plate (111) with the at least one channel (113) and the cover plate (112) with the lens array (120).

14. Method according to claim 13, wherein step (a) includes (a1) deposition of a metal coating on an upper side of the substrate plate (111), where the channel arrangement (110) is exposed, and
(a2) removing the metal coating from portions of the substrate plate (111) outside of the channels (113).

15. Method according to claim 13 or 14, wherein
- step (b) includes forming the focusing lenses (121) by thermal reflow, and/or
- step (a) includes forming a plurality of refractive prism elements on an outer surface of the substrate plate (114).
